# EUROPEAN PATENT SPECIFICATION

(11) **EP 2 935 421 B1**
(45) Date of publication and mention of the grant of the patent: **12.08.2020**
(21) Application number: 13811577.9
(22) Date of filing: 20.12.2013
(51) Int. Cl.: C08J 5/24, C08G 59/44, C08G 59/50

(54) **FAST CURE EPOXY RESIN SYSTEMS**
SCHNELLHÄRTENDE EPOXIDHARZSYSTEME
SYSTÈMES DE RÉSINE ÉPOXYDE À DURCISSEMENT RAPIDE

(30) Priority: 21.12.2012 GB 201223152
(43) Date of publication of application: 28.10.2015
(73) Proprietor: Hexcel Composites Limited, Duxford Cambridgeshire CB22 4QB (GB)
(72) Inventor: HARRINGTON, Chris, Duxford Cambs CB22 4QB (GB)
(74) Representative: Pols, Ronald Maarten
(86) International application number: PCT/EP2013/077863
(87) International publication number: WO 2014/096435

(56) References cited:
- EP-A1- 1 279 688
- EP-A1- 1 731 553
- WO-A1-03/011971
- US-A- 4 459 398

## Description

The present invention relates to fast cure epoxy resin systems which allow faster moulding cycles to be employed in the production of articles therefrom. Articles are often manufactured from fibre reinforced epoxy resins in processes in which multilayers of fibre reinforcement and epoxy resins are laid up in a mould and cured to form the finished article. A fibrous layer impregnated with a curable resin is known herein as a prepreg and the resin in the prepreg may be uncured or partially cured.

Epoxy formulations typically contain epoxy resins which may be selected from a wide range of epoxy containing materials according to the cure cycle to be employed and the nature of the finished article to be produced. Epoxy resins can be solid, liquid or semi-solid and are characterised by their functionality and epoxy equivalent weight. The functionality of an epoxy resin is the number of reactive epoxy sites per molecule that are available to react and cure to form the cured structure. For example, a bisphenol-A epoxy resin which has a functionality of 2, certain glycidly amines can have a functionality of more than 4. The reactivity of an epoxy resin is indicated by its epoxy equivalent weight (EEW). The lower the EEW, the higher the reactivity. The EEW is the weight of epoxy resin material in grams containing 1 gram per mole of epoxy groups.

The present invention is particularly concerned with a prepreg containing a reactive epoxy resin composition that can be cured over a short moulding cycle time, to allow the cured material to be removed from the mould shortly after curing.

Epoxy formulations may also include catalysts and/or curatives and these may also be selected according to the nature of the epoxy resin, the product to be produced and the cure cycle that is required.

Epoxy resin systems are generally cured in a mould where several layers are superimposed with layers of the fibrous reinforcement such as carbon fibre, glass fibre, Kevlar and aramid fibre. The systems are then cured in the mould by heating. Cured epoxy resin systems can be brittle and it is well known to include impact modifiers in the epoxy resin systems in order to reduce their brittleness. Typical impact modifiers that have been proposed are thermoplastic materials such as polyamides including nylon 6, nylon 11, and nylon 66 or polyethers, polyvinylformaldehyde and polysulfones and/or combinations of the aforesaid components.

The curing of epoxy resin is an exothermic reaction and care must be taken to avoid reaction runaway and the overheating of the material in the mould which can cause damage to both the moulding materials and the mould itself.

The cure cycles employed for curing prepregs and stacks of prepregs are a balance of temperature and time taking into account the reactivity of the resin and the amount of resin and fibre employed. From an economic point of view it is desirable that the cycle time be as short as possible and so curing agents and accelerators are usually included in the epoxy resin. As well as requiring heat to initiate curing of the resin the curing reaction itself can be highly exothermic and this needs to be taken into account in the time/temperature curing cycle in particular for the curing of large and thick stacks of prepregs. This is increasingly the case with the production of laminates for industrial applications which require large amounts of epoxy resin which in turn can result in excessive temperatures being generated within the stack due to the exotherm of the resin curing reaction. Excessive temperatures are to be avoided as they can damage the mould reinforcement or cause some decomposition of the resin. Excessive temperatures can also cause loss of control over the cure of the resin leading to run away cure.

Generation of excessive temperatures can be a greater problem when thick sections comprising many layers of prepreg are to be cured as is becoming more prevalent in the production of fibre reinforced laminates for heavy industrial use such as in the production of wind turbine structures particularly wind turbine spars and shells from which the blades are assembled. In order to compensate for the heat generated during curing it has been necessary to employ a dwell time during the curing cycle in which the moulding is held at a constant temperature for a period of time to control the temperature of the moulding. This increases cycle time to undesirably long cycle times.

For example a thick stack of epoxy based prepregs such as 60 or more layers can require cure temperatures above 100 °C for several hours. However, the cure can have a reaction enthalpy of 150 joules per gram of epoxy resin or more and this reaction enthalpy brings the need for a dwell time during the cure cycle at below 100 °C to avoid overheating and decomposition of the resin. Furthermore, following the dwell time it is necessary to heat the stack further to above 100 °C (for example to above 125 °C) to complete the cure of the resin. This leads to undesirably long and uneconomic cure cycles. In addition, the high temperatures generated can cause damage to the mould or bag materials or require the use of special and costly materials for the moulds or bags. WO03011971 discloses a composition for prepregs, comprising an epoxy resin (cyclo)aliphatic primary monoamine and a photopolymerizable compound with a preset ratio of epoxy group to photopolymerizable compound and a latent curing agent such as dicyandiamide.

Another important property for prepregs is that prior to curing they can be readily handled, transported and laid up in a mould ready for curing. Additionally, it is desirable to eliminate or minimise the presence of captured air pockets within or between the prepregs as these can lead to irregularities in the cured structure. The prepregs must therefore have sufficient strength to enable them to be laid up in stacks combined with a low level of tack so that they can be readily handled and will not pick up dirt and other impurities.

In addition, once cured the epoxy based structure has a glass transition temperature (Tg) above which the moulding is not sufficiently self-supporting to enable it to be removed from the mould. In this situation it is therefore necessary to allow the moulding to cool down to below the Tg before it can be removed from the mould. There is therefore a desire to produce laminar structures from prepregs in which the cured resin has a high glass transition temperatures (Tg) to enable the cured material to be sufficiently stiff to be removed from the mould shortly after curing or upon curing to a desired level, typically 95%. It is therefore preferred that the Tg be at or near the maximum temperature. Increase in the Tg may be achieved by using a more reactive resin. However the higher the reactivity of the resin the greater the heat released during curing of the resin in the presence of hardeners and accelerators which can increase the need for dwell time and delay before removal from the mould.

In general terms 95% cure defines a material where a sufficient majority of the reactive sites have been consumed so that the mechanical performance and thermal resistance of the part is within the desired characteristic range for that material. It is possible to expend additional time and energy to obtain the final 5% of cure but this will not result in a significant mechanical or thermal improvement. Digital Scanning Calorimetry is utilized to monitor the time to reach 95% cure. The total heat or reaction enthalpy detected during the DSC measurement is identified as the heat released by the curing reaction when the resin is heated from a starting temperature of typically 10°C to at temperature at which cure is anticipated to be completed. For fast cure epoxy resins the temperature at which cure is anticipated to be fully completed is typically 225°C and the ramp rate for the temperature is typically set at 10°C/min rate.

Once the total heat enthalpy has been established, the residual cure of any subsequent test sample of the resin which has been subjected to a particular cure can then be analysed by exposing the test sample to the same heat up rate and the remaining reaction enthalpy is determined using DSC. The degree of cure of the test sample is then given by the following formula: cure% = (ΔHi -ΔHe ) / ΔHi x 100
where ΔHi is the heat generated by the uncured resin heated from the starting temperature up to the anticipated fully cured temperature (in the above example 225°C) and ΔHe the heat generated by the test sample heated up to it being fully cured at 225°C.

PCT publication WO 2009/118536 is concerned with providing and curing stacks of prepregs wherein at least the surface of the resin has a viscosity and a tack at room temperature and each prepreg has a stiffness at room temperature such that when two prepregs are disposed in a vertical stack at room temperature with adjacent material surfaces, the adjacent resin material surfaces are unadhered and form continuous air paths therebetween. WO 2009/118536 does not address how to combine these handleability issues with moulding temperature and a fast reaction time and the need to produce cured materials of the required Tg. WO 2009/118936 defines these properties in terms of a Phase angle δ between the complex modulus G* and the storage modulus G'. The Phase angle is used to describe the physical state of the resin. The Phase angle is low when the resin will not flow and is a solid or semi sold; and the Phase angle increases as the ability to flow increases, for example when the temperature of the resin is increased. However in epoxy resin systems that contain a curative which is normally heat activated, the cross linking action of the epoxy resin due to the action of the curative will cause the resin to harden and the phase angle to drop at elevated temperature. The Phase angle can therefore be used to determine the form of the resin and the temperature at which a moulding will be sufficiently solid to be readily removed from the mould. The present invention therefore seeks to reduce the temperature at which the desirable lower Phase angle is obtained and/or to reduce the moulding time required to reach the desirable low Phase angle. When a Phase angle below 20°C, preferably below 15°, more preferably below 10° is reached, a moulding can be removed from the mould.

Previous attempts to reduce the time required for the curing reaction by appropriate selection of the epoxy resin or resins used, the amount and nature of the curative and the amount and nature of the catalyst have had limited success in reducing the time required for the curing reaction, they have however not successfully provided an easily handleable prepreg which has a sufficiently fast reaction time to produce a material with a sufficiently high Tg and low Phase angle to enable removal from the mould without requiring time to enable the cured product to be handleable. It is also important that speeding up the cure time does not undesirably impact the combination of mechanical properties required in the laminar structure to be produced from the prepreg.

The need for higher Tg and low Phase angle must therefore be balanced with requirements for handleability of the prepreg and with the economic needs to minimise the time required for the moulding cycle. The moulding cycle for epoxy resins and prepregs involves three stages:
i) the provision (laying up) of materials (prepregs) in the mould;
ii) the curing reaction; and
iii) the removal of the cured product from the mould.

There is therefore a need for an epoxy resin system which provides a prepreg that can be easily provided to a mould, can be cured rapidly at a particular temperature and which enables the cured material to be demoulded at temperatures near to or at the curing temperature.

European Patent Application 1279688 A1 relates to quick cure carbon fibre reinforced epoxy resin and describes the desirable properties for prepregs to be
1) a tacky dough like consistency prior to curing
2) a low reactivity at room temperature
3) a high degree of cure after heating for no more than 2 hours at 150°C.

EP 1279688 A1 provides a matrix composition which can be used to form prepregs that is curable to at least 95% cure on heating to a temperature of 150°C for 3 minutes, to provide a composition having a glass transition temperature of at least and preferably higher than 140°C and/or on heating to a temperature of 80°C for 5 hours provides a composition having a glass transition temperature of at least preferably higher than 100°C. The compositions may comprise a bisphenol epoxy resin having a functionality of two or more and having an epoxy equivalent weight from 150 to 1500 and a catalyst which is at least 70% 2,4, di(N,N, dimethylurea) toluene. In a preferred embodiment the composition further includes a thermoplastic additive such as a polyvinyl formal.

EP 1279688 A1 additionally provides a resin that has a 95% cure at 130°C in 19 minutes and a 95% cure at 150°C in as little as 3 minutes and has a glass transition temperature upon curing of at least 140°C. The present invention provides faster curing systems having a Tg and a Phase angle below 20° at or close to the moulding temperature.

According to the invention there is provided a formulation, a prepreg, a stack and a structure as defined in any one of the accompanying claims.

The present invention provides an epoxy resin formulation containing a curative as defined in claim 1 that can be cured at 150°C to 95% cure in no more than 150 seconds, and can be cured at 120°C to 95% cure in no more than 4 minutes to provide a cured resin having a Tg no greater than 140°C. The cured epoxy resin formulation preferably has a Phase

angle below 20° at a temperature below 140°C, preferably below 15°, more preferably below 10°. The phase angle may be above 10° or 20° or 30° or 40° at a temperature below 140°C.

In another embodiment there is provided an epoxy resin formulation containing a curative, the formulation comprising a phase angle below 30° when cured at 120°C for less than 600s, preferably less than 550s.

In a further embodiment there is provided an epoxy resin formulation containing a curative, the formulation comprising a phase angle below 30° when cured at 130°C for less than 350s, preferably less than 300s.

The invention further provides prepregs containing such an epoxy resin formulation.

Within this application, the cure time for the resin formulation is defined as the time required for 95% cure. The Tg of the resin is measured according to Differential Mechanical Analysis according to Test Method ASTM D7028 and the Tg is considered to be the temperature at which there is an onset of the drop in storage modulus.

Digital Scanning Calorimetry was utilized to monitor the time to reach 95% cure as discussed above whereby heating is started at 10°C to 225°C at 10°C/min rate.

In a further embodiment the invention provides a prepreg comprising fibrous reinforcement and an epoxy resin formulation that can be cured at 150°C in no more than 150 seconds, can be cured at 120°C in no more than 4 minutes to provide a cured resin having a Tg no greater than 140°C, and a Phase angle of 20° or less at a temperature of 140°C or below.

In another embodiment, the invention provides a prepreg comprising fibrous reinforcement and an epoxy resin formulation that can be cured at 150°C in no more than 10 to 140 seconds, 30s to 180s, preferably from 40s to 120s, more preferably from 35s to 100s and/or combinations of the aforesaid ranges, and can be cured at 120°C in no more than 30s to 220s, preferably from 80s to 200s, more preferably from 130s to 190s and/or combinations thereof to provide a cured resin having a Tg no greater than 140°C, and a Phase angle of 20° or less at a temperature of 140°C or below.

The epoxy resin composition also comprises one or more urea based curing agents in an amount from 4 to 10 wt % based on the weight of the epoxy resin of a curing agent, more preferably 4 to 6 wt %, more preferably from 4 to 5 wt %. Preferred urea based materials are the isomers of 2,6 and 2,4 toluene bis dimethyl urea (known as 2,6 and 2,4 TDI urone) such as the range of materials available under the commercial name DYHARD® the trademark of Alzchem, urea derivatives. The composition further comprises from 7 to 10 wt.% of a dicyandiamide hardener, more preferably from 8 to 10, most preferably from 8.5 to 9.5% by weight of the hardener. The rapid cure time is achieved by matching the ratio of the curative and the accelerator to the amount of available reactive groups in the epoxy formulation. The higher Tg is obtained by use of a resin having a functionality of at least 2 to provide sufficient reactive groups. The handleability of the prepreg is likewise determined by the nature and amount of the fibrous reinforcement and the nature and amount of the epoxy resin.

In another embodiment the present invention relates to the production of laminar structures by laying up a stack of layers of prepregs employing the resin formulation of this invention and causing the stack to cure. Such layers of curable structures in which the resin is uncured are sometimes known as prepregs.

Additional properties that may be required of prepregs is their adhesion to substrates to which they may be bonded during curing. For example, although we have described the bonding of prepregs together for certain applications, prepregs may be laid up with and bonded to other layers such as, for example, metal foils. In the production of skis, prepregs can be laid up with aluminium foils and the edges of the skis can be trimmed with metal. It is therefore important that the required physical properties of the ski and the adhesion between the aluminium and the prepreg or steel that is achieved during curing is not undesirably impacted by the use of the fast curing epoxy resin systems of this invention.

The present invention therefore relates to prepregs comprising fibres and thermosetting resins which may be readily handled and stacked to form a preform and subsequently cured rapidly to form a reinforced composite material having a Tg and a Phase angle enabling removal of the cured material from the mould at temperatures close to the cure temperature. Such composite materials are lightweight and of high strength and are used in many structural applications such as in the automobile and aerospace industries and in sporting goods applications such as the manufacture of skis.

Prepreg is the term used to describe fibres and fabric impregnated with a resin in the uncured or partially cured state and ready for curing. The fibres may be in the form of tows or fabrics. A tow generally comprises a plurality of thin fibres. The fibrous materials and resins employed in the prepregs will depend upon the properties required of the cured fibre reinforced material and also the use to which the cured laminate is to be put. The fibrous material is described herein as a structural fibre. Various methods have been proposed for the production of prepregs, one of the preferred methods being the impregnation of a moving fibrous web with a liquid, molten or semi-solid uncured thermosetting resin. The prepreg produced by this method may then be cut into sections of the desired length, and a stack of the sections may be cured by heating to produce the final fibre reinforced laminate. Curing may be performed in a vacuum bag which may be placed in a mould for curing as is preferred in the manufacture of wind energy structures such as shells or blades, or spars. Alternatively, the stack may be formed and cured directly in a mould.

The invention further provides a stack of prepregs containing an epoxy resin of functionality at least 2 and an average epoxy equivalent weight (EEW) from 150 to 1500, preferably from 200 to 800, more preferably from 300 to 600 and most preferably from 200 to 500 and/or combinations thereof, and containing from 7 to 10wt% of a dicyandiamide hardener and from 4 to 10 wt % based on the weight of the epoxy resin of one or more urea based curing agents, the resin being curable by an externally applied temperature at 150°C in no more than 150 seconds to provide a cured resin having a Tg no greater than 140°C and preferably with a Phase angle when cured of less than 20° at temperatures of 140°C or below. As mentioned previously the fast cure and the high Tg are obtained by selecting the ratio of curative and hardener to obtain the desired reactivity of the epoxy resin. The average EEW is defined as the average molecular weight of the resin divided by the number of epoxy groups per molecule.

We have found that such desirable prepregs and stacks of prepregs may be obtained if the epoxy resin has a functionality of at least two and is cured in the presence of a hardener such as dicyandiamide and in the presence of a urea based curing agent. The relative amount of the curing agent and the epoxy resin that should be used will depend upon the reactivity of the resin and the nature and quantity of the fibre reinforcement in the prepreg.

Typically higher than normal amounts are used in order to get the rapid cure and we prefer to use from 4 to 10 wt %, more preferably 4 to 6 wt % of the urea based curing agent. A particularly good results have been obtained when using from 4.25 to 4.75 wt % of the urea based curing agent based on the weight of epoxy resin is used and from 6 to 10 wt %, more preferably 7 to 10 wt % of the hardener such as dicyandiamide should be used, particularly good results have been obtained when using 8.5 to 9.5 wt % dicyandiamide especially in combination with 4.25 to 4.75 wt % of the urea based curing agent.

The prepregs of this invention are typically used at a different location from where they are manufactured and they therefore require handleability. It is therefore preferred that they are dry or as dry as possible and have low surface tack. It is therefore preferred to use high viscosity resins. This also has the benefit that the impregnation of the fibrous layer is slow allowing air to escape and to minimise void formation.

The preferred process for producing prepregs is a continuous process involving the passage of many thousands of fibres through a series of stages, typically guided by rollers. The point where the fibres meet the resin, usually in sheet form, is the start of the impregnation stage. Before the fibres are contacted with the resin and reach the impregnation zone they are typically arranged in a plurality of tows, each tow comprising many thousands of filaments, e.g. 12,000. These tows are mounted on bobbins and are fed initially to a combing unit to ensure even separation of the fibres. It has been found that unusually low fibre tensions just after the bobbin feed position provide further improvement to the disruption of the fibres in the eventual prepreg. Thus, the tension per filament at this position is preferably from 0007 to 0.025 g, preferably from 0.01 to 0.015 g.

In the process a second layer of resin comprising thermosetting resin maybe brought into contact with the other face of the fibres typically at the same time as the first layer, compressing the first and second layers of resin such that resin enters the interstices of the fibres. Such a process is considered to be a one-stage process because, although each face of the fibres is contacted with one resin layer, all the resin in the eventual prepreg is impregnated in one stage.

Resin impregnation typically involves passing the resin and fibres over rollers, which may be arranged in a variety of ways. Two primary arrangements are the simple "nip" arrangement and the "S-wrap" arrangement.

An S-wrap stage is wherein the resin and fibres, both in sheet form pass around two separated rotating rollers in the shape of the letter "S", known as S-wrap rollers. Alternative roller arrangements include the widely used "nip" wherein the fibre and resin are pinched, or nipped, together as they pass between the pinch point between two adjacent rotating rollers.

The pressures induced in the resin and fibres can be controlled to cause the desired degree of disruption of the fibre. Parameters such as separation between rollers, speed, relative speed between rollers and resin and fibres and the contact area of the rollers can be varied to achieve the desired degree of disruption and also resin impregnation.

Nip stages may also be used, provided the pressures are kept low, e.g. by control over the gap between adjacent rollers.

It has been found that although large pressures in theory provide excellent resin impregnation, they can be detrimental to the outcome of the prepreg in the one-stage process.

Thus, it is preferred that the pressure exerted onto the fibres and resin preferably does not exceed 35 kg per centimetre of width of the fibre layer, more preferably does not exceed 30 kg per centimetre.

For example, when in S-wrap arrangement, two rollers are preferably spaced apart to provide a gap between the centres of them of from 250 to 600 mm, preferably from 280 to 360 mm, most preferably from 300 to 340 mm, e.g. 320 mm.

Two adjacent pairs of S-wrap rollers are preferably separated between the centres of respective rollers of from 200 to 1200 mm, preferably from 300 to 900 mm, most preferably from 700 to 900 mm e.g. 800 mm.

The impregnation rollers may rotate in a variety of ways. They may be freely rotating or driven. If driven, they are conventionally driven so that there is no difference between the speed of rotation and the speed of passage of the resin and fibres over the rollers. Sometimes it may be desirable to apply a slight increased speed or decreased speed relative to the passage of resin and fibres. Such a difference is referred to in the art as "trim".

Following impregnation of resin into the fibres, often there is a cooling stage and further treatment stages such as laminating, slitting and separating.

The moulding material or structure of the invention may be characterized by its resin content and/or its fibre volume and resin volume and/or its degree of impregnation as measured by the water up take test.

Resin and fibre content of uncured moulding materials or structures are determined in accordance with ISO 11667 (method A) for moulding materials or structures which contain fibrous material which does not comprise unidirectional carbon. Resin and fibre content of uncured moulding materials or structures which contain unidirectional carbon fibrous material are determined in accordance with DIN EN 2559 A (code A). Resin and fibre content of cured moulding materials or structures which contain carbon fibrous material are determined in accordance with DIN EN 2564 A.

The fibre and resin volume % of a prepreg moulding material or structure can be determined from the weight % of fibre and resin by dividing the weight % by the respective density of the resin and carbon fibre.

The % of impregnation of a tow or fibrous material which is impregnated with resin is measured by means of a water pick up test.

The water pick up test is conducted as follows. Six strips of prepreg are cut of size 100 (+/-2) mm x 100 (+/-2) mm. Any backing sheet material is removed. The samples are weighed near the nearest 0.001 g (W1). The strips are located between PTFE backed aluminium plates so that 15 mm of the prepreg strip protrudes from the assembly of PTFE backed plates on one end and whereby the fibre orientation of the prepreg is extends along the protruding part. A clamp is placed on the opposite end, and 5 mm of the protruding part is immersed in water having a temperature of 23°C, relative air humidity of 50% +/- 35%, and at an ambient temperature of 23°C. After 5 minutes of immersion the sample is removed from the water and any exterior water is removed with blotting paper. The sample is then weighed again W2. The percentage of water uptake WPU(%) is then calculated by averaging the measured weights for the six samples as follows: WPU(%)=[(<W2>-<W1>)/<W1>)x100. The WPU(%) is indicative of the Degree of Resin Impregnation (DRI).

Typically, the values for the resin content by weight for the uncured prepreg of the invention are in the ranges of from 15 to 70% by weight of the prepreg, from 18 to 68% by weight of the prepreg, from 20 to 65% by weight of the prepreg, from 25 to 60% by weight of the prepreg, from 25 to 55% by weight of the prepreg, from 25 to 50% by weight of the prepreg, from 25 to 45% by weight of the prepreg, from 25 to 40% by weight of the prepreg, from 25 to 35% by weight of the prepreg, from 25 to 30% by weight of the prepreg, from 30 to 55% by weight of the prepreg, from 35 to 50% by weight of the prepreg and/or combinations of the aforesaid ranges.

Typically, the values for the resin content by volume for the uncured prepreg of the invention are in the ranges of from 15 to 70% by volume of the prepreg, from 18 to 68% by volume of the prepreg, from 20 to 65% by volume of the prepreg, from 25 to 60% by volume of the prepreg, from 25 to 55% by volume of the prepreg, from 25 to 50% by volume of the prepreg, from 25 to 45% by volume of the prepreg, from 25 to 40% by volume of the prepreg, from 25 to 35% by volume of the prepreg, from 25 to 30% by volume of the prepreg, from 30 to 55% by volume of the prepreg, from 35 to 50% by volume of the prepreg and/or combinations of the aforesaid ranges.

Water pick up values for the uncured prepreg moulding material and tows of the invention may be in the range of from 1 to 90%, 5 to 85%, 10 to 80%, 15 to 75%, 15 to 70%, 15 to 60%, 15 to 50%, 15 to 40%, 15 to 35%, 15 to 30%, 20 to 30%, 25 to 30% and/or combinations of the aforesaid ranges.

In a preferred embodiment the interior of the fibrous material is at least partially resin free to provide an air venting path or structure, so that air that may be present in the tows from the outset or that may be introduced during impregnation with the liquid resin is not trapped within the structure by the resin and can escape during preparation and consolidation of the prepreg. The air is able to escape along the length of the tows and also from the second side of the fibrous layer if the impregnation by the resin is such that some or all of the surface of the second side of the fibrous layer is not carrying resin. Furthermore, the provision of the spaces between the filaments of the tows will allow air trapped between the prepregs during stack formation to escape particularly if, in addition, one side of the prepreg is not entirely coated with resin.

The intersticial resin ensures that the material has adequate structure at room temperature to allow handling of the material. This is achieved because at room temperature (23°C), the resin has a relatively high viscosity, typically in the range of from 1000 to 100,000 Pa.s, more typically in the range of from 5000 Pa.s to 500,000 Pa.s. Also, the resin may be tacky. Tack is a measure of the adhesion of a prepreg to a tool surface or to other prepreg plies in an assembly. Tack may be measured in relation to the resin itself or in relation to the prepreg in accordance with the method as disclosed in "Experimental analysis of prepreg tack", Dubois et al, (LaMl)UBP/lFMA, 5 March 2009. This publication discloses that tack can be measured objectively and repeatably by using the equipment as described therein and by measuring the maximum debonding force for a probe which is brought in contact with the resin or prepreg at an initial pressure of 30N at a constant temperature of 30°C and which is subsequently displaced at a rate of 5 mm/min. For these probe contact parameters, the tack F/Fref for the resin is in the range of from 0.1 to 0.6 where Fref = 28.19N and F is the maximum debonding force. For a prepreg, the tack F/Fref is in the range of from 0.1 to 0.45 for F/Fref where Fref = 28.19N and F is the maximum debonding force. However, a fibrous support web, grid or scrim may also be located on at least one exterior surface of the fibrous reinforcement to further enhance the integrity of the material or structure during handling, storage and processing.

The epoxy resin formulation of the invention which is used as the matrix resin material in the prepreg preferably has a storage modulus G' of from 3 x 10⁵ Pa to 1 x 10⁸ Pa and a loss modulus G" of from 2 x 10⁶ Pa to 1 x 10⁸ Pa at room temperature (20 °C).

Preferably, the resin material has a storage modulus G' of from 1 x 10⁶ Pa to 1 x 10⁷ Pa, more preferably from 2 x 10⁶ Pa to 4 x 10⁶ Pa at room temperature (20 °C).

Preferably, the resin material has a loss modulus G" of from 5 x 10⁶ Pa to 1 x 10⁷ Pa, more preferably from 7 x 10⁶ Pa to 9 x 10⁶ Pa at room temperature (20 °C).

Preferably, the resin material has a complex viscosity of from 5 x 10⁵ Pa to 1 x 10⁷ Pa.s, more preferably from 7.5 x 10⁵ Pa to 5 x 10⁶ Pa.s at room temperature (20 °C)..

Preferably, the resin material has a complex viscosity of from 1 x 10⁶ Pa to 2 x 10⁶ Pa.s. more preferably from 5 to 30 Pa.s at 80°C. Preferably, the resin material has a viscosity of from 10 to 25 Pa.s at 80°C. Preferably, the resin material is an epoxy resin.

We have discovered that the aforesaid storage modulus and loss modulus properties allow the air venting structure to remain in place during handling, storage and lay up of the prepreg moulding material or structure up to the start of processing when the laminate stack is heated up to temperatures over 40°C (such as 60°C) and a vacuum pressure is applied, even if multiple plies (stacks of 20, 30, 40, 60 or even more plies) are laid up.

Preferably, the prepreg moulding material is elongate in a longitudinal direction thereof and the fibrous reinforcement is unidirectional along the longitudinal direction of the prepreg.

The behaviour of thermosetting prepreg materials is highly viscoelastic at the typical lay-up temperatures used. The elastic solid portion stores deformation energy as recoverable elastic potential, whereas a viscous liquid flows irreversibly under the action of external forces.

This complex viscosity is obtained using a rheometer to apply an oscillation experiment. From this the complex modulus G^{*} is derived as the complex oscillation which is applied to the material is known (Principles of Polymerization, John Wiley & Sons, New York, 1981).

In viscoelastic materials the stress and strain will be out of phase by an angle delta. The individual contributions making the complex viscosity are defined as G' (Storage Modulus) = G* x cos (delta); G" (Loss Modulus) = G* x sin(delta). This relationship is shown in Figure 8 of WO 2009/118536.

G* is the complex modulus. G' relates to how elastic the material is and defines its stiffness. G" relates to how viscous a material is and defines the damping, and liquid non recoverable flow response of the material.

For a purely elastic solid (glassy or rubbery), G" =0 and the phase angle delta is 0°, and for a purely viscous liquid, G'=0 and the phase angle delta is 90°.

The loss modulus G" indicates the irreversible flow behaviour and a material with a high loss modulus G" is also desirable to prevent the early creep-like flow and maintain an open air path for longer. Therefore the resin used in the prepregs of the present invention has a high storage modulus and a high loss modulus, and correspondingly a high complex modulus, at a temperature corresponding to a typical lay-up temperature, such as room temperature (21°C).

In this specification, the viscoelastic properties, i.e. the storage modulus, loss modulus and complex viscosity, of the resin used in the prepregs of the present invention were* measured at application temperature (i.e. a lay-up temperature of 20°C) by using a Bohlin VOR Oscillating Rheometer with disposable 25 mm diameter aluminium plates. The measurements were carried out with the following settings: an oscillation test at increasing temperature from 50°C to 150°C at 2°C/mm with a controlled frequency of 1.59 Hz and a gap of 500 micrometer.

Typically, the stiffness of the viscoelastic prepreg is characterised by the resin exhibiting a high elastic rheological response. The resin rheology is characterised by a storage modulus G' of the resin at room temperature, preferably between 3 x 105 Pa and 1 x 108 Pa at 200C, more preferably from 1 x 106 Pa to 1 x 107 Pa, yet more preferably from 2 x 106 Pa to 4 x 106 Pa. The higher the storage modulus at room temperature (20 oC), the greater the air transport properties of the prepreg stack. However, the upper limit of the storage modulus is limited because otherwise the prepreg would become too rigid and would develop a tendency to snap as the prepreg is being laminated even onto the gentle curvature typical in a wind turbine spar.

In the manufacture of a structural member using the prepreg moulding material or structure of the present invention, preferably the resin has a high loss modulus G" between 2 x 106 Pa and 1 x 108 Pa at 20°C, more preferably from 5 x 106 Pa to 1 x 107 Pa, yet more preferably from 7 x 106 Pa to 9 x 106 Pa.

The resin material preferably has a high complex viscosity at 20°C of from 5 x 10⁵ Pa to 1 x10⁷ Pa.s, more preferably from 7.5 x 10⁵ Pa to 5 x 10⁶ Pa.s, yet more preferably from 1 x 10⁶ Pa to 2 x 10⁶ Pa.s.

In order to produce final laminates with substantially uniform mechanical properties it is important that the structural fibres and the epoxy resin be mixed to provide a substantially homogenous prepreg. This requires uniform distribution of the structural fibres within the prepreg to provide a substantially continuous matrix of the resin surrounding the fibres. It is therefore important to minimise the encapsulation of air bubbles within the resin during application to the fibres. It is therefore preferred to use high viscosity resins. The prepregs should contain a low level of voids in order and it is therefore preferred that each prepreg and the prepreg stack has a water pick-up value of less than 9%, more preferably less than 6%, most preferably less than 3%. The water pick-up test determines the degree of waterproofing or impregnation of prepregs. For this purpose, a specimen of prepreg material is initially weighed and clamped between two plates in such a way that a strip of specimen 15 mm wide protrudes. This arrangement is suspended in the direction of the fibres in a water bath for 5 minutes. After removing the plates, the specimen is again weighed. The difference in weight is used as a measured value for the degree of impregnation. The smaller the amount of water picked up, the higher the degree of waterproofing or impregnation.

The prepregs of this invention are intended to be laid-up with other layers of materials which may be other composite materials (e.g. other prepregs according to the invention or other prepregs) to produce a prepreg stack which can be cured to produce a fibre reinforced laminate. In other embodiments the prepregs may be laid up with other layers such as metal foils such as steel and aluminium foil.

The prepreg is typically produced as a roll of prepreg and in view of the tacky nature of such materials, a backing sheet is generally provided to enable the roll to be unfurled at the point of use. Thus, preferably the prepreg according to the invention comprises a backing sheet on an external face.

The epoxy resin of functionality at least 2 used in this invention has a high reactivity. The epoxy equivalent weight (EEW) of the resin is in the range from 150 to 1500, preferably of from 200 to 500 and the resin composition comprises the epoxy resin in combination with an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidylether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, Ml) DEN439 (from Dow Chemicals), Araldite ECN 1273 (from Huntsman Advanced Materials), and Araldite ECN 1299 (from Huntsman Advanced Materials).

The reinforcing fibres may be synthetic or natural fibres or any other form of material or combination of materials that, combined with the resin composition of the invention, forms a composite product. The reinforcement web can either be provided via spools of fibre that are unwound or from a roll of textile. Exemplary fibres include glass, carbon, graphite, boron, ceramic and aramid. Preferred fibres are carbon and glass fibres particularly carbon fibres.

Hybrid or mixed fibre systems may also be envisaged. The use of cracked (i.e. stretch- broken) or selectively discontinuous fibres may be advantageous to facilitate lay-up of the product according to the invention and improve its capability of being shaped. Although a unidirectional fibre alignment is preferable, other forms may also be used. Typical textile forms include simple textile fabrics, knit fabrics, twill fabrics and satin weaves. It is also possible to envisage using non-woven or non-crimped fibre layers. The surface mass of fibres within the fibrous reinforcement is generally 80-4000 g/m², preferably 100-2500 g/m², and especially preferably 150-2000 g/m². The number of carbon filaments per tow can vary from 3000 to 320,000, again preferably from 6,000 to 160,000 and most preferably from 12,000 to 48,000. For fibreglass reinforcements, fibres of 600-2400 tex are particularly adapted.

Exemplary layers of unidirectional fibrous tows are made from HexTow® carbon fibres, which are available from Hexcel Corporation. Suitable HexTow® carbon fibres for use in making unidirectional fibre tows include: IM7 carbon fibres, which are available as tows that contain 6,000 or 12,000 filaments and weight of 0.223 g/m and 0.446 g/m respectively; IM8- IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used such as those containing about 25,000 filaments available from Toray and those containing about 50,000 filaments available from Zoltek. The tows typically have a width of from 3 to 7 mm and are fed for impregnation on equipment employing combs to hold the tows and keep them parallel and unidirectional.

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould and cured.

Epoxy resins can become brittle upon curing and toughening materials can be included with the resin to impart durability although they may result in an undesirable increase in the viscosity of the resin. Alternatively the toughening material may be supplied as a separate layer such as a veil.

Where the additional toughening material is a polymer it should be insoluble in the matrix epoxy resin at room temperature and at the elevated temperatures at which the resin is cured. The polymer may be a thermoplastic Suitable thermoplastics may comprise polyamides (PAS), polyethersulfone (PES) and polyetherimide (PEI). Polyamides such as nylon 6 (PA6) and nylon 12 (PA12) and mixtures thereof are preferred. We prefer to use a phenoxy resin which as well as being thermoplastic can be cured at elevated temperatures. A preferred formulation of this invention contains from 2 to 10 wt % of a phenoxy resin.

The prepregs of this invention are produced by impregnating the fibrous material with the epoxy resin. In order to increase the rate of impregnation, the process is preferably carried out at an elevated temperature so that the viscosity of the resin in reduced. However it must not be so hot for a sufficient length of time that premature curing of the resin occurs. Thus, the impregnation process is preferably carried out at temperatures in the range of from 40°C to 80°C.

The resin composition can be spread onto the external surface of a roller and coated onto a paper or other backing material to produce a layer of curable resin. The resin composition can then be brought into contact with the fibrous layer for impregnation perhaps by the passage through rollers. The resin may be present on one or two sheets of backing material, which are brought into contact with the structural fibrous layer and by passing them through heated consolidation rollers to cause impregnation. Alternatively the resin can be maintained in liquid form in a resin bath either being a resin that is liquid at ambient temperature or being molten if it is a resin that is solid or semi-solid at ambient temperature. The liquid resin can then be applied to a backing employing a doctor blade to produce a resin film on a release layer such as paper or polyethylene film. The structural fibrous layer may then be placed into the resin and optionally a second resin layer may be provided on top of the fibrous layer.

A backing sheet can be applied either before or after impregnation of the resin. However, it is typically applied before or during impregnation as it can provide a non-stick surface upon which to apply the pressure required for causing the resin to impregnate the fibrous layer.

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould.

Once it is created in the mould the prepreg or prepreg stack may be cured by exposure to an externally applied elevated temperature in the range 70°C to 110°C, and optionally elevated pressure, to produce a cured laminate.

The exotherm due to the curing of the prepreg stack may take the temperatures within the stack to above 110°C, however we have found that if the externally applied temperature is within the range of 70°C to 110°C, curing of a prepreg or stack of prepregs based on an epoxy resin of EEW from 150 to 1500 particularly of EEW from 200 to 500 can be accomplished at a temperature of about 150°C in less than 150 seconds to provide a cured resin having a Tg of between 130 and 140°C and a Phase angle at 140°C of 20° or lower so that the cured article can be removed from the mould without undue delay.

Thus, in further aspect, the invention relates to a process of curing the epoxy resin within a prepreg or prepreg stack as described herein, the process involving exposing the prepreg or prepreg stack to an externally applied temperature in the range whereby the epoxy resin composition cures in less than 150 seconds. The process may be performed in a vacuum bag which may be placed in a mould or directly in a mould and is preferably carried out at a pressure of less than 3.0 bar absolute.

The curing process may be carried out at a pressure of less than 2.0 bar absolute. In a particularly preferred embodiment the pressure is less than atmospheric pressure. The curing process may be carried out employing one or more externally applied temperatures in the range of from 70°C to 110°C, for a time sufficient to cure the epoxy resin composition to the desired degree. In particular it is preferred that the curing cycle has a duration of less than three hours.

Curing at a pressure close to atmospheric pressure can be achieved by the so-called vacuum bag technique. This involves placing the prepreg or prepreg stack in an airtight bag and creating a vacuum on the inside of the bag, the bag may be placed in a mould prior or after creating the vacuum and the resin then cured by externally applied heat to produce the moulded laminate. The use of the vacuum bag has the effect that the prepreg stack experiences a consolidation pressure of up to atmospheric pressure, depending on the degree of vacuum applied.

Upon curing, the prepreg or prepreg stack becomes a composite laminate, suitable for use in a structural application, such as for example an automotive, marine vehicle or an aerospace structure or a wind turbine structure such as a shell for a blade or a spar. Such composite laminates can comprise structural fibres at a level of from 80% to 15% by volume, preferably from 58% to 65% by volume.

The present invention is illustrated but in no way limited by reference to the following examples.

The various parameters in the examples are determined as follows. The viscosity of the resin or resin mixture was determined by a Bohlin Gemini plate rheometer running from about 40° C to about 160° C at 2° C/minute temperature ramp, and at a 10 rpm frequency. Digital Scanning Calorimetry was utilized to monitor the time to reach 95% cure. The same Bohlin Gemini rheometer was used to measure the phase angle.

DSC measurement was used to measure the %cure in accordance with the method as hereinbefore described. To establish the total reaction enthalpy of the resin, the resin was heated from a starting temperature of typically 10°C to at temperature of 225°C and the ramp rate for the temperature was set at 10°C/min rate. Once the total heat enthalpy has been established, the residual cure of any subsequent test sample of the resin which had been subjected to a particular cure was analysed by exposing the test sample to the same heat up rate and the remaining reaction enthalpy was determined using DSC. The degree of cure of the test sample was then calculated from the following formula: cure% = (ΔHi -ΔHe ) / ΔHi x 100
where ΔHi is the heat generated by the uncured resin heated from the starting temperature up to 225°C and ΔHe the heat generated by the test sample heated up to it being fully cured at 225°C.

The value of Tg was determined in accordance with ASTM D7028 (using an Alpha Technologies Model APA 2000).

A formulation A according to the present invention is prepared by blending the following ingredients:

**Table 1**

| **Compound** | **wt%** | **Description** | | |
|---|---|---|---|---|
| Epoxy resin formulation | 77.5 | See below | | |
| DICY | 18.0 | 50% Dicyandiamide in 50% Bisphenol-A epoxy resin | | |
| Dyhard UR505 | 4.5 | bis urea accelerator | | |

| **Composition Epoxy resin formulation** | | | | |
|---|---|---|---|---|
| | | | **wt%** | **Description** |
| Phenoxy resin | | | 3.9 | YP50 supplied by Kukdo |
| Bisphenol-A epoxy resin | | | 59.4 | EEW 320, 2-functional |
| Epoxy phenyl novolac, YD PN 638 | | | 35.6 | EEW 180, 3.6 functional |
| | | | 100.0 | |

The formulation A could be cured in 140 seconds when heated at 150°C to provide a cured resin having a Tg of about 135°C.

Comparative formulations 7 and 8 were prepared by blending the following compositions as follows as set out in Table 2:

**Table 2**

| | **Comparative 7** | **Comparative 8** |
|---|---|---|
| **Composition** | **(weight%)** | **(weight%)** |
| Epikote 828 | 70.0 | 34.4 |
| Epikote 1001 | 10.8 | 10.8 |
| Araldite GT6084-2 | 10.8 | 10.8 |
| YDPN 638 | 0.0 | 35.6 |
| DICY | 4.6 | 4.6 |
| UR500 | 3.8 | 3.8 |

Epikote 828 as supplied by Alzchem is a Liquid bisphenol-A epoxy of epoxy equivalent weight (EEW) of 187. Epikote 1001 as supplied by Alzchem is a solid bisphenol A epoxy of EEW of 440. Araldite GT6084-2 as supplied by Huntsman is a solid bisphenol A epoxy of EEW of 860. YDPN-638 as supplied by Kukdo is a phenol novalak epoxy resin. Dicy is a dicyandiamide curative and UR500 as supplied by Dyhard is a 2,4' / 2,6' TDI urone accelerator. In Table 2

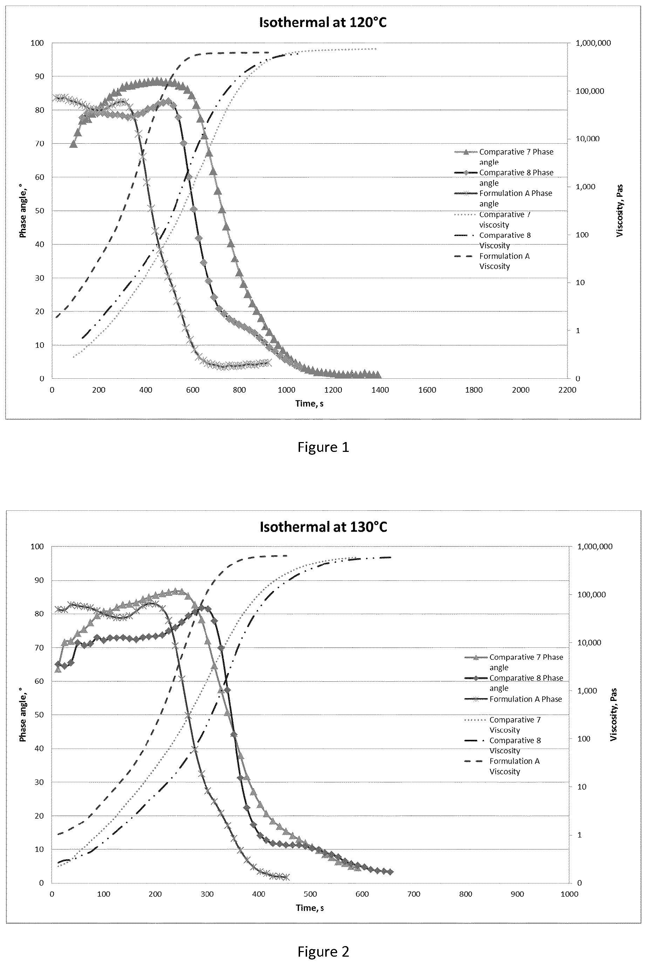

The viscosity and the phase angle were measured using a Bohlin Gemini rheometer for Formulation A and for the Comparative formulations 7 and 8 when exposing the resin mixtures of these formulations to constant temperatures of 120 °C and 130 °C. The results are presented in respective corresponding figures Figure 1 and Figure 2.

The rapid cure time is achieved by the ratio of the amount of curative (dicyandiamide) and bis urea accelerator used compared to the amount of reactive epoxy groups that are available in the formulation.

The required Tg is achieved by the incorporation of a resin with functionality greater than 2 as this has more reactive sites this gives a higher cross linked density after curing and a correspondingly higher Tg.

The resin formulation A was used in a prepreg comprising 37 wt % of the resin formulation and 50,000 strand 150 gram/square meter unidirectional carbon fibre reinforcement (88 g/m2 resin impregnated into 150 g/m2 UD carbon fibre reinforcement, SGL SIGRAFIL C30 T050 EPY 50k fibre). The prepreg was found to have a Phase angle of 10° at a temperature of 134°C when heated from 60°C at a heating rate of 2°C/minute. The materials were cured by heating for 2 minutes at 150°C in a press exerting a pressure of 4 Bar. The physical properties of the moulding were as follows.

**Table 3**

| Moulding properties containing formulation A | unit | |
|---|---|---|
| Flexural strength | MPa | 1768 |
| Flex modulus | GPa | 115 |
| 0° Tensile strength | MPa | 2323 |
| 0° Tensile modulus | GPa | 144 |
| 90° Tensile strength | MPa | 58 |
| 90° Tensile modulus | GPa | 8 |
| 0° Compression strength | MPa | 1629 |
| 0° Compression modulus | GPa | 123 |
| 90° Compression strength | MPa | 220 |
| 90° Compression modulus | GPa | 9.2 |
| In Plane Shear strength | MPa | 126 |
| In Plane Shear modulus | GPa | 4 |
| Fracture toughness, mode 1 (G1c) | J/m2 | 994 |
| Fracture toughness, mode 2 (G11c) | J/m2 | 1618 |
| ILSS | MPa | 92 |

The same formulation A was applied to Hexcel IM7 carbon fibre (12000 fibres / tow) with a nominal resin content of 37% and a fibre areal weight of 200gsm. The resulting prepreg was cured by heating for 30 minutes at 140°C in an autoclave and the results were as follows.

**Table 4**

| Moulding properties containing formulation A | unit | |
|---|---|---|
| Flexural strength | MPa | 1638 |
| Flexural modulus | GPa | 129 |
| Fracture toughness, mode 1 (G1c) | J/m2 | 961 |
| Fracture toughness, mode 2 (G11 c) | J/m2 | 1686 |
| ILSS | MPa | 82 |

The formulation therefore enables the rapid production of mouldings with high Tg whilst retaining the mechanical properties obtainable when employing a slower cooling stage.

## Claims

1. An epoxy resin formulation containing from 7 to 10 wt% of a dicyandiamide hardener, from 4 to 10 wt % based on the weight of the epoxy resin of one or more urea based curing agents, and in which the epoxy resin has a functionality of at least 2, the formulation being curable at 150°C in no more than 150 seconds, and being curable at 120°C in no more than 4 minutes to provide a cured resin having a Tg no greater than 140°C, as measured according to test Method ASTM D7028.

2. An epoxy resin formulation according to Claim 1 having a Phase angle when cured of below 20° at a temperature below 140°C.

3. An epoxy resin formulation according to Claim 2 in which the Phase angle is below 15°.

4. An epoxy resin formulation according to any of the preceding claims in which the epoxy resin has a storage modulus G' of from 3 x 10⁵ Pa to 1 x 10⁸ Pa and a loss modulus G" of from 2 x 10⁶ Pa to 1 x 10⁸ Pa at a temperature of 20 °C, as measured in the description.

5. An epoxy resin formulation according to Claim 4 in which the epoxy resin has a complex viscosity of from 5 x 10⁵ Pa to 1 x 10⁷ Pa.s at a temperature of 20 °C, as measured in the description.

6. A prepreg comprising fibrous reinforcement and an epoxy resin formulation according to any of the preceding claims.

7. A prepreg according to Claim 6 in which the resin content by volume of the uncured prepreg is in the range of from 15 to 70% by volume of the prepreg.

8. A prepreg according to Claim 6 or Claim 7 in which the fibrous reinforcement comprises cracked, selectively discontinuous or continuous filaments.

9. A prepreg according to any Claims 6 to 8 in which the filaments are made from carbon, basaltic fibre, graphite, glass, metalized polymers, aramid, natural fibres and/or mixtures thereof.

10. A process for the production of laminar structures by laying up a stack of layers of prepregs according to any of Claims 6 to 9 and causing the stack to cure.

11. A stack of prepregs containing an epoxy resin of functionality at least 2 and an epoxy equivalent weight (EEW) from 150 to 1500 and containing from 7 to 10wt% of a dicyandiamide hardener and from 4 to 10 wt % based on the weight of the epoxy resin of one or more urea based curing agents, the resin being curable by an externally applied temperature at 150°C in no more than 150 seconds to provide a cured resin having a Tg no greater than 140°C, as measured according to test Method ASTM D7028.

12. A stack of prepregs according to Claim 11 in which the epoxy resin formulation has a Phase angle when cured of less than 20° at temperatures of 140°C or below.

13. A laminar structure comprising a cured stack of prepregs according to Claim 11 or Claims 12.

## Patentansprüche

1. Epoxidharzformulierung, die 7 bis 10 Gew. -% eines Dicyandiamidhärters, 4 bis 10 Gew.-%, bezogen auf das Gewicht des Epoxidharzes, eines oder mehrerer Härtungsmittel auf Harnstoffbasis enthält und bei der das Epoxidharz eine Funktionalität von mindestens 2 aufweist, wobei die Formulierung zur Bereitstellung eines gehärteten Harzes mit einer entsprechend der Prüfmethode ASTM D7028 gemessenen Tg von nicht mehr als 140 °C bei 150 °C innerhalb von nicht mehr als 150 Sekunden härtbar ist und bei 120 °C innerhalb von nicht mehr als 4 Minuten härtbar ist.

2. Epoxidharzformulierung nach Anspruch 1, die nach der Härtung bei einer Temperatur unter 140 °C einen Phasenwinkel von weniger als 20° aufweist.

3. Epoxidformulierung nach Anspruch 2, bei der der Phasenwinkel weniger als 15° beträgt.

4. Epoxidharzformulierung nach einem der vorhergehenden Ansprüche, bei der das Epoxidharz bei einer Temperatur von 20 °C einen Speichermodul G' von 3 x 10⁵ Pa bis 1 x 10⁸ Pa und einen Verlustmodul G" von 2 x 10⁶ Pa bis 1 x 10⁸ Pa, jeweils gemessen gemäß der Beschreibung, aufweist.

5. Epoxidharzformulierung nach Anspruch 4, bei der das Epoxidharz bei einer Temperatur von 20 °C eine komplexe Viskosität von 5 x 10⁵ Pa.s bis 1 x 10⁷ Pa.s, gemessen gemäß der Beschreibung, aufweist.

6. Prepreg, umfassend eine faserförmige Verstärkung und eine Epoxidharzformulierung nach einem der vorhergehenden Ansprüche.

7. Prepreg nach Anspruch 6, bei dem der volumenbezogene Harzgehalt des ungehärteten Prepregs im Bereich von 15 bis 70 Volumen-% des Prepregs liegt.

8. Prepreg nach Anspruch 6 oder Anspruch 7, bei dem die faserförmige Verstärkung gerissene, wahlweise diskontinuierliche oder kontinuierliche Filamente, umfasst.

9. Prepreg nach einem der Ansprüche 6 bis 8, bei dem die Filamente aus Kohlenstoff, Basaltfaser, Graphit, Glas, metallisierten Polymeren, Aramid, Naturfasern und/oder Mischungen davon hergestellt sind.

10. Verfahren zur Herstellung laminarer Strukturen durch Aufschichten eines Stapels von Schichten von Prepregs nach einem der Ansprüche 6 bis 9 und Auslösen der Härtung des Stapels.

11. Stapel von Prepregs, die ein Epoxidharz mit einer Funktionalität von mindestens 2 und einem Epoxidäquivalentgewicht (Epoxy Equivalent Weight, EEW) von 150 bis 1500 enthalten und die 7 bis 10 Gew.-% eines Dicyandiamidhärters und 4 bis 10 Gew.-%, bezogen auf das Gewicht des Epoxidharzes, eines oder mehrerer Härtungsmittel auf Harnstoffbasis enthalten, wobei das Harz zur Bereitstellung eines gehärteten Harzes mit einer entsprechend der Prüfmethode ASTM D7028 gemessenen Tg von nicht mehr als 140 °C bei einer extern angelegten Temperatur von 150 °C innerhalb von nicht mehr als 150 Sekunden härtbar ist.

12. Stapel von Prepregs nach Anspruch 11, bei dem die Epoxidharzformulierung nach der Härtung bei einer Temperatur von 140 °C oder weniger einen Phasenwinkel von weniger als 20° aufweist.

13. Laminare Struktur, die einen gehärteten Stapel von Prepregs nach Anspruch 11 oder Anspruch 12 umfasst.

## Revendications

1. Formulation de résine époxy contenant de 7 à 10 % en poids d'un durcisseur dicyandiamide, de 4 à 10 % en poids par rapport au poids de la résine époxy d'un ou plusieurs agents de durcissement à base d'urée et dans laquelle la résine époxy a une fonctionnalité d'au moins 2, la formulation étant durcissable à 150 °C en pas plus de 150 secondes et étant durcissable à 120 °C en pas plus de 4 minutes pour fournir une résine durcie ayant une Tg, telle que mesurée selon la méthode d'essai ASTM D7028, inférieure ou égale à 140 °C.

2. Formulation de résine époxy selon la revendication 1 ayant un angle de phase lorsqu'elle est durcie qui est au-dessous de 20° à une température au-dessous de 140 °C.

3. Formulation de résine époxy selon la revendication 2 dans laquelle l'angle de phase est au-dessous de 15°.

4. Formulation de résine époxy selon l'une quelconque des revendications précédentes dans laquelle la résine époxy a un module de conservation G' de 3 x 10⁵ Pa à 1 x 10⁸ Pa et un module de pertes G" de 2 x 10⁶ Pa à 1 x 10⁸ Pa à une température de 20 °C, tels que mesurés dans la description.

5. Formulation de résine époxy selon la revendication 4 dans laquelle la résine époxy a une viscosité complexe, telle que mesurée dans la description, de 5 x 10⁵ Pa.s à 1 x 10⁷ Pa.s à une température de 20 °C.

6. Préimprégné comprenant un renfort fibreux et une formulation de résine époxy selon l'une quelconque des revendications précédentes.

7. Préimprégné selon la revendication 6 dans lequel la teneur en résine en volume du préimprégné non durci est dans la plage de 15 à 70 % en volume du préimprégné.

8. Préimprégné selon la revendication 6 ou la revendication 7 dans lequel le renfort fibreux comprend des filaments cassés, sélectivement discontinus ou continus.

9. Préimprégné selon l'une quelconque des revendications 6 à 8 dans lequel les filaments sont formés à partir de carbone, de fibre basaltique, de graphite, de verre, de polymères métallisés, d'aramide, de fibres naturelles et/ou de mélanges de ceux-ci.

10. Procédé pour la production de structures lamellées par la superposition d'une pile de couches de préimprégnés selon l'une quelconque des revendications 6 à 9 et le fait d'amener la pile à durcir.

11. Pile de préimprégnés contenant une résine époxy ayant une fonctionnalité d'au moins 2 et un poids équivalent d'époxy (EEW) de 150 à 1500 et contenant de 7 à 10 % en poids d'un durcisseur dicyandiamide et de 4 à 10 % en poids par rapport au poids de la résine époxy d'un ou plusieurs agents de durcissement à base d'urée, la résine étant durcissable par une température appliquée de manière externe à 150 °C en pas plus de 150 secondes pour fournir une résine durcie ayant une Tg, telle que mesurée selon la méthode d'essai ASTM D7028, inférieure ou égale à 140 °C.

12. Pile de préimprégnés selon la revendication 11 dans laquelle la formulation de résine époxy a un angle de phase lorsqu'elle est durcie inférieur à 20° à des températures de 140 °C ou au-dessous.

13. Structure lamellée comprenant une pile de préimprégnés selon la revendication 11 ou la revendication 12 durcie.
